# EUROPEAN PATENT APPLICATION

(11) **EP 4 373 102 A1**
(43) Date of publication of application: **22.05.2024**
(21) Application number: 22208323.0
(22) Date of filing: 18.11.2022
(51) Int. Cl.: H04N 21/4223, H04N 21/44, H04N 7/18, H04N 21/431, H04N 21/436, H04N 21/4402, H04N 21/442

(54) **ENCODING AWARE OVERLAY FORMAT**

(71) Applicant: Axis AB, 223 69 Lund (SE)
(72) Inventor: Nyström, Johan, 223 69 LUND (SE); Yuan, Song, 223 69 LUND (SE)
(74) Representative: AWA Sweden AB

(57) **Abstract**

A monitoring camera is configured to adapt the rendering of an image overlay to the compression level used in an encoding unit of the camera, in order to avoid spending unnecessary amounts of resources on rendering a highquality overlay when a high compression level is applied. When the encoding unit will apply a high compression level to the image, the overlay will be rendered in a lower quality, and when the encoding unit will apply a lower compression level, the overlay will be rendered in a higher quality.

## Description

### Technical field

The present invention relates to rendering of overlays when encoding images.

### Background

Video cameras, such as surveillance cameras or monitoring cameras, are currently used in many different applications, both indoors and outdoors. In some cases, it is useful to add information to images recorded by such cameras in the form of overlays that are rendered by the camera and added to the images. Some examples of overlays are informative or warning texts or graphical symbols, bounding boxes showing object detection results and graphs with statistical data regarding the monitored environment, such as from a people counting device or analytics algorithm.

The overlays are rendered by the camera and added to the images before encoding. The camera then outputs an image stream of encoded images with overlays. However, especially when the overlays are large, i.e., cover a large part of the image, the rendering may require a substantial amount of processing power and use up a lot of memory at the camera. It is therefore of interest to find solutions to lower the effort needed to render overlays.

### Summary of the invention

An object of the present invention is to facilitate power, memory and memory bandwidth savings in a camera in connection with overlay rendering. The invention is defined in the appended claims.

With the method as defined in the appended claims, savings in processing power, use of memory and memory bandwidth will be possible by adapting the effort put into overlay rendering to the level of compression that will be applied to the rendered overlay. When a high level of compression is used when encoding the image with the rendered overlay, the rendered overlay will be generated using rendering settings requiring less processing power, memory or memory bandwidth, in order to provide an overlay having a lower quality. When a high compression level is used, it would be a waste of rendering resources (processing power, memory and memory bandwidth) to render the overlay in high quality, since that high quality would be lost after the encoding has been performed. In other words, the sparing of resources connected to the overlay rendering can therefore be done without any detrimental effect to the final image, since the high compression level would anyway remove the higher quality of the overlay.

Vice versa, when a low level of compression is used when encoding the image with the rendered overlay, the rendered overlay will be generated with rendering settings allowing more processing power, memory or memory bandwidth to be used in order to provide a higher quality overlay. In this scenario, it makes sense to use more rendering resources since the high quality of the rendered overlay will likely be maintained after the encoding has taken place.

In the context of this application, and specifically in the context of the appended claims, certain terms are used, and to simplify the reading, here follows a brief list of definitions of some terms.

The term graphical element is used to denote a geometrical shape, a symbol, an icon, a graph or a diagram, or any other visual representation that would commonly be referred to as a graphical element. The term may also be used to denote text, letters or number, but in the context of this application the term text will sometimes also be used to denote text, letters or numbers.

The term overlay is used to denote an image representation of a graphical element that is overlaid or placed in or over an image (or part of an image), typically by replacing the original image pixels in the area of the overlay with the pixels of the overlay. The format used for the overlay is usually a bitmap format.

The term rendering an overlay is used to denote the generation or provision of the image representation of the overlay from the graphical element.

The term rendering settings is used to denote such settings that impact the rendering of an overlay. A non-exclusive list of such settings is: color format, spatial resolution, level of details (smallest size of details to be included or excluded in the rendering), tessellation block size, anti-aliasing or smoothing filter state (on/off, strength or size of filter).

The term resources is used to denote the amount of processing power, memory usage and memory bandwidth that is used to render an overlay.

The term adding the overlay to the image is used to denote the act of replacing pixels in a designated area of the image where the overlay is placed, with the pixels from the image representation of the graphical element (i.e., the rendered overlay)

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described or acts of the methods described as such device and method may vary. It is also to be understood that the terminology used herein is for purpose of describing particular embodiments only and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

### Brief description of the drawings

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and to fully convey the scope of the invention to the skilled person.
Fig 1 illustrates elements of a monitoring camera relevant to the invention.
Fig 2 is a flow chart illustrating a method according to embodiments of the invention.

### Detailed description

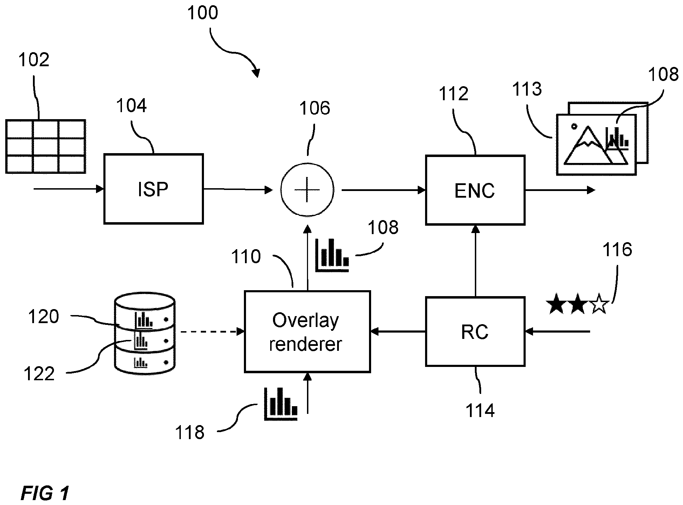

Fig 1 shows a monitoring camera 100 which is configured to encode images with an overlay. The camera 100 is equipped with standard image capturing components in the form of an image sensor and appropriate optics. These components are not illustrated in fig 1 to reduce the complexity of the figure. In the camera 100, image data 102 from the image sensor is received by an image processing unit, ISP, 104. The ISP 104 processes the image data and forwards it to a composition engine or video post processing unit, VPP, 106. Examples of processing performed by the ISP 104 include white balancing, vignetting correction, contouring, color matrixing, demosaicing, and noise filtering.

In addition to the processed image data from the ISP 104, the VPP 106 receives a rendered overlay 108, i.e., an image representation of a graphical element or a text, typically in bitmap format, from an overlay rendering unit 110.. The overlay may either be static, i.e., remain unchanged between different images, or it may change between consecutive images of an image sequence. The overlay may also be static for a sequence of images and then change and remain static for another sequence of images.

The VPP 106 adds the rendered overlay 108 to the image received from the ISP 104, at a position specified by the overlay rendering unit. The VPP typically adds the rendered overlay to the image by replacing pixels, in an area designated to contain the overlay, by the pixels of the rendered overlay. The VPP then forwards the result to an encoding unit 112, which performs image compression to encode the image with the overlay 108 and outputs an encoded image 113 with the overlay 108. The compression may be performed according to any commonly used video coding method which is able to vary the compression applied to images, such as H.264, H.265 or AV1.

The operation of the overlay rendering unit 110 may require a lot of resources in the form of processing power, memory and memory bandwidth, especially when rendering a large overlay or a complex overlay with many details. It is therefore of interest to find ways of making the operation of the overlay rendering unit 110 more efficient. At the same time, as the inventors have realized, in case the encoding unit 112 is run with encoding settings that in the end lead to a lower quality image, i.e., when a high level of compression, such as with a high quantization parameter, QP, value is employed, the effort put into the overlay rendering will be mostly in vain, since the compression will in that case to a large extent destroy the rendered quality of the overlay. In addition, memory bandwidth and buffer usage when the rendered overlay is read by the VPP 106 are also affected by the rendering settings for the overlay.

Therefore, as is shown in fig 1, the camera according to the present invention has been modified by adding a control mechanism to the overlay rendering unit 110 which is able to take the level of compression to be used by the encoding unit 112 into account. This is achieved by feeding such information to the overlay rendering unit 110 that is used by the encoding unit 112 to make decisions regarding compression level. One important example of a parameter impacting the compression level is the QP value, both when this is selected per image and when it varies within an image between different image areas.

The information is typically received from a rate controller 114, which in turn will use, e.g., network data 116 regarding available bandwidth, to generate this information. The rate controller 114 which is able to control bitrate output from the encoding unit, by informing the encoding unit on suitable compression levels, typically in the form of a QP-value. In addition to network data, other data that may be used by the rate controller to generate the information is the currently allowed or desired bitrate, such as the bitrate according to an average bitrate (ABR) scheme, where the total bitrate budget over time determines the currently allowed bitrate, or the allowed or desired bitrate according to another type of scheme for limiting and controlling bitrate, such as a constant bitrate (CBR) scheme or a maximum bitrate (MBR) scheme. By using such information from the rate controller 114 in the overlay rendering unit 110, the rendering of the overlay can be adapted to the encoded image quality that will be provided from the encoding unit 112, and the overlay rendering unit 110 will not waste resources on rendering a high quality overlay that will be heavily compressed during encoding.

Going more into detail as regards the operation of the overlay rendering unit 110, this unit will receive input data 118 with details of an overlay to be added to an image. The input data 118 may be in the form of a text file or a graphics file, detailing the content and visual appearance of the overlay. The input data 118 may be in the form of a two-dimensional vector-based description, such as in scalable vector graphic (SVG) format, or a drawing command or instruction for a vector graphics library. The input data 118 may also be a 3D graphics based description in the form of a command, a texture and a shader. In addition, the input data 118 may be in the form of a picture with a pixel buffer, or an encoded picture, e.g., in JPEG format, which will need to be decoded into a pixel buffer.

The overlay rendering unit 110 will then render the overlay based on the input data 118 and output the rendered overlay 108, or, in other words, an image representation, typically in bitmap format, of the text or graphical element. The information received from the rate controller 114 will be used to control the rendering of the overlay in such manner that when the information indicates that the encoding unit 112 will use a compression level resulting in a lower quality encoded image, the overlay will also be rendered in a lower quality.

As mentioned, the compression level can either be a compression level used for an entire image, or a compression level that will be used in the area of the image where the overlay is added.

In other words, when the rate controller 114 has received data 116 indicating that there is a need to produce a low bitrate video, such as by selecting a high QP value for the compression in the encoding unit 112, the overlay rendering unit 110 will output a rendered overlay 108 having lower quality, e.g., including less details, having a color format with less bits or having a lower spatial resolution. To lower the quality of the overlay in this way will have the advantageous effect using less resources, in the form of processing power, memory usage or memory bandwidth.

There are several different options for how the control of the overlay rendering will take place to provide lower rendered quality of the overlay 108 when the quality of the encoded image is lower, and vice versa. Several different methods are available for rendering overlays, and the actions taken to lower the amount of utilized resources in the form of processing power used when rendering the overlay, internal memory usage and memory bandwidth and buffering when the VPP reads the rendered overlay, will differ depending on the rendering method.

The overlay rendering unit may use a set of predefined relations, e.g., listed in a database or table, where different levels of compression, typically in the form of a QP value, are linked to values of the different parameters and settings listed below which have an impact on the quality of the rendered overlay. The relations between compression level and the quality impacting rendering parameters may be predetermined, e.g., by trying out different combinations of compression level and rendering parameters for a selection of videos and overlay types. It may, e.g., be an aim to reduce the quality of the rendered overlay, for each specific compression level, only to such extent that there is no major or discernible difference between the overlay in compressed form when rendered in the highest possible quality and when rendered with the selected quality reduction.

According to one option, the rendering will take place in the form of a rasterization process whereby input data 118 describing the overlay in vector graphics format will be converted or rasterized to a rendered overlay 108 in raster format, typically as a bitmap. Depending on the information received from the rate controller 114, the bitmap image will be rendered using more or less resources.

Several different parameters, also referred to as rendering settings, can be changed in order to control the amount of resources used when rendering the overlay from the input data 118. A first parameter that could be of interest concerns the color format, where fewer bits may be used to represent color in the rendered overlay when the encoding unit will compress the encoded image more. Using a color format with fewer bits will require less processing power, less memory use and less memory bandwidth compared to when a color format employing more bits is used. The color format can be selected as a 1-bit palette, a 4-bit palette, a 8-bit (A8/R8) format, a 16-bit (ARGB4444/ARGB1555) format or a 32-bit (ARGB8888) format.

To exemplify, the 1-bit palette could be selected when the information from the rate controller 114 indicates that the highest available compression (highest QP-value) is used by the encoding unit 112, and the 32-bit format could be selected when the information from the rate controller 114 indicates that the lowest available compression (lowest QP-value) is used by the encoding unit 112.

Another parameter that can be controlled is the spatial resolution of the rendered bitmap version of the overlay. A lower spatial resolution is selected when the encoding unit 112 will use a higher compression level, thereby avoiding wasting resources connected to the process of providing the overlay. As noted, this can be done without any detrimental effect to the final image, since the high compression level would anyway remove any finer details provided by a high spatial resolution. By rendering the overlay with a lower spatial resolution, less processing power, memory and memory bandwidth will be required than if a higher spatial resolution is used. The overlay will then first be rendered in a selected spatial resolution, and, after that, it will be scaled as needed to the appropriate size by the overlay rendering unit 110 or the VPP 106.

Yet another option is to control the level of details to be included in the rendered overlay 108. As an example, in case a high compression level (high QP value) is used, small text elements in the overlay, such as text labels on a graph, may be excluded from the rendering process. In other words, in case the compression level is higher than a certain compression value threshold, text or graphical elements in the overlay that have a size smaller than a certain size threshold would be excluded from the rendering process. This makes sense since the text would not be readable anyway at a high compression level. Another example is that simplified vector graphics features may be selected for the rendering. In more detail, this means that different details in overlay descriptions in vector format can be filtered on size, and details that are smaller than a threshold are excluded from rendering. It is also possible to take into account how close (near to each other) such smaller details of the vector description are placed in the overlay, and if they are closer than a threshold limit, some of them, such as every second or every third, can be filtered out and excluded from rendering.

According to another option, a graphics processing unit, GPU, is used to generate the rendered overlay 108. The GPU will, according to well-known practices, execute the necessary steps, such as providing vertices, fragmentation, tessellation, transformation to frame buffer space, and rasterization, to generate the rendered overlay 108. In order to use less resources for the overlay rendering, a lower tessellation level may be selected.

Another alternative for impacting the amount of resources in the form of processing power, memory and memory bandwidth needed for the overlay rendering in case GPU overlay rendering is employed is to use a color format employing fewer bits to represent color, similar to what is done when the overlay is rendered in a rasterization process.

When the overlay is provided by rendering in a GPU or by a rasterization process, it is also possible to include control of an anti-aliasing filter or smoothing filter in the rendering settings. Anti-aliasing or smoothing filters improve the quality of the rendered overlay by removing any jagged edges or lines in the rendered overlay. The filters use a fair amount of processing power, and, as the inventors have realized, in some instances their use will not lead to a higher quality overlay in the end, due to other factors. Firstly, since such filters only have an impact when richer color formats, i.e., using more bits, are employed, the filters can advantageously be bypassed in case color formats with less bits are used for the rendering of the overlay. In addition, in case a high compression level is used, it will also be a good idea to bypass such filters, since after encoding with a high compression level, artefacts will be introduced at sharp edges, thereby counteracting the effects of any anti-aliasing filtering.

According to yet another option, the rendering of the overlay, or more precisely, the provision of a rendered overlay from the overlay rendering unit 110, will take place by the overlay rendering unit 110 retrieving, from a memory 120, a selected version of a pre-rendered overlay, typically in bitmap format. The memory 118 contains pre-rendered bitmap versions 122 of overlays with different characteristics. The memory 120 may, e.g., contain pre-rendered versions of overlays with different spatial resolutions, or it may hold versions of overlays rendered in different color formats.

When the rate controller 114 indicates to the overlay rendering unit 110 that the encoding unit 112 will use settings leading to a high quality image with many details, such as when a low level of compression (low QP value) is used, the overlay rendering unit 110 will then retrieve a version of the overlay from the memory 118 which is rendered in a color format with many bits, or with a high spatial resolution, or both.

Vice versa, when the rate controller 114 indicates that the encoding unit 112 will encode the image using settings leading to a high level of compression, e.g., using a high QP value, the overlay rendering unit 110 will instead retrieve a pre-rendered version of the overlay in a color format using fewer bits or having a lower spatial resolution, or both, which in turn will have require less memory bandwidth when read by the VPP.

The variant involving keeping several pre-rendered overlay versions in a memory will be most useful in case only a few different overlays need to be provided. In case the overlay is highly dynamic, this option will be less useful, since it might then be difficult to predict, and pre-render, the correct overlays and have them available when needed.

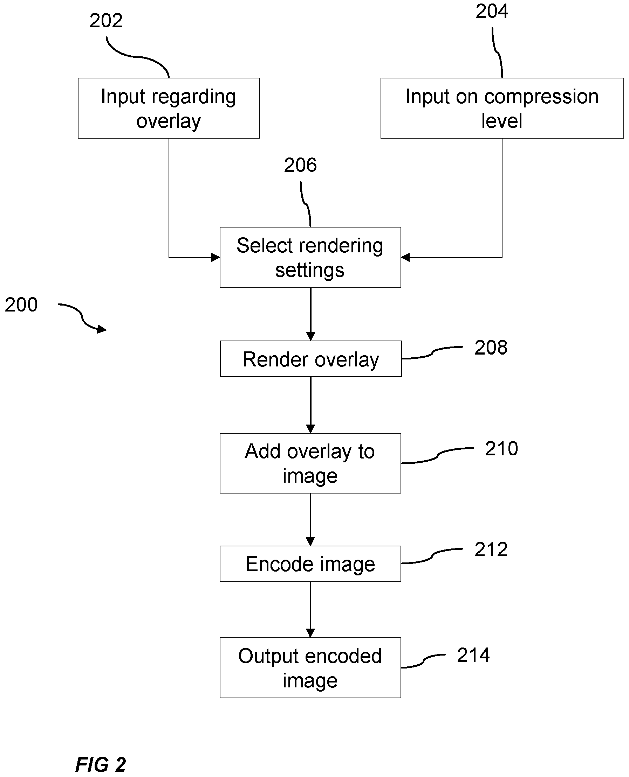

Fig 2 illustrates the method 200 presented herein, in the form of a flow chart. In step 202 input information 118 regarding an overlay, e.g., a graphical element or a text, is received by an overlay rendering unit 110. In addition, in step 204, input regarding a compression level to be used for encoding an image with a rendered overlay is also received, typically from a rate controller 114.

In step 206, the overlay rendering unit 110 then selects rendering settings for generating a rendered overlay 108, based on the inputs received in step 202 and 204 and in step 208, the overlay rendering unit 110 generates the rendered overlay using the selected rendering settings, according to any of the different variants discussed above.

In step 210, the rendered overlay is received by a composition engine, VPP, 106, and is added to an image that the VPP 106 receives from an image processing unit, ISP, 104. The image with the added overlay is then encoded and compressed in step 212 using the compression level indicated by the rate controller 114, and in step 214 the encoded image with the overlay is output.

In summary, the present application outlines a method of encoding images with an overlay, where the following steps are performed
- receiving input regarding a graphical element to be added as overlay to an area of an image,
- receiving input regarding a level of compression to be used when encoding the image,
- selecting rendering settings based on the level of compression, wherein the rendering settings are selected to render the overlay utilizing less resources when the compression level is higher, than when the compression level is lower,
- rendering the overlay from the input regarding the graphical element using the rendering settings,
- adding the rendered overlay to the area of the image,
- encoding the image with the rendered overlay using the level of compression, and
- outputting the encoded image with the rendered overlay.
The input regarding the level of compression may typically be received from a rate controller, and the level of compression may typically be in the form of a quantization parameter, QP, value.

In some cases, the level of compression is a local level of compression to be used for the area of the image where the overlay is added, and in some cases the level of compression is a global level of compression to be used for the image.

Regarding the rendering settings, these may pertain to a level of detail in the overlay, wherein fewer details are included in the rendered overlay when the compression level is higher than when the compression level is lower. Another option is that the rendering settings comprise a color format for rendering the overlay, and wherein a color format using fewer bits is selected when the compression level is higher than when the compression level is lower. The rendering settings may in addition or as an alternative comprise a spatial resolution of the overlay, wherein a lower spatial resolution is selected when the compression level is higher than when the compression level is lower.

In some cases, the rendering of the overlay includes retrieving, from a memory, one of a plurality of bitmap versions of the graphical element, wherein a bitmap version having at least one of a lower spatial resolution or a color format using fewer bits is selected when the compression level is higher than when the compression level is lower.

In some cases, rendering settings comprise a tessellation level, wherein a lower tessellation level with fewer segments is selected when the compression level is higher than when the compression level is lower.

Another option is that fewer features of the graphical element are selected for inclusion in the rendering of the overlay when the compression level is higher than when the compression level is lower. Yet another option is that text features of the graphical element having a size below a size threshold are excluded from the rendering of the overlay when the compression level is above a threshold and included otherwise.

The rendering settings may also comprise a state of an anti-aliasing filter, wherein the anti-aliasing filter is switched off when the compression level is above a threshold and switched on otherwise.

In other words, the present application presents a monitoring camera which is configured to adapt the rendering of an image overlay to the compression level used in an encoding unit of the camera, in order to avoid spending unnecessary amounts of resources on rendering a high quality overlay when a high compression level is applied. When the encoding unit will apply a high compression level to the image, the overlay will be rendered in a lower quality, and when the encoding unit will apply a lower compression level, the overlay will be rendered in a higher quality.

Thus, a monitoring camera as presented herein is configured to encode images with an overlay and comprises the following units:
- an overlay rendering unit configured to
   ∘ receive input regarding a graphical element to be added as overlay to an area of an image,
   ∘ receive input regarding a level of compression to be used when encoding the image,
   ∘ select rendering settings based on the level of compression, wherein the rendering settings are selected to render the overlay utilizing less resources when the compression level is higher, than when the compression level is lower, and
   ∘ render the overlay from the input regarding the graphical element using the rendering settings,
- a video post processing unit configured to
   ∘ receive the rendered overlay from the overlay rendering unit,
   ∘ receive the image from an image processing unit,
   ∘ adding the rendered overlay to the area of the image, and
   ∘ output the image with the rendered overlay
- an encoding unit configured to
   ∘ receive the image with the rendered overlay,
   ∘ receive the input regarding the level of compression,
   ∘ encode the image with the rendered overlay using the level of compression, and
   ∘ output the encoded image with the rendered overlay

In addition, the monitoring camera may advantageously comprise a rate controller which is configured to provide the level of compression to the overlay rendering unit and the encoding unit.

On a final note, it should be pointed out that the monitoring camera 100 thus comprises various components 104, 106, 110, 112, 114 which are configured to implement the functionality of the camera 100. In particular, each illustrated component corresponds to a functionality of camera 100. Generally, the camera 100 may comprise circuitry which is configured to implement the components 104, 106, 110, 112, 114 and, more specifically, their functionality.

In a hardware implementation, each of the components 104, 106, 110, 112, 114 may correspond to circuitry which is dedicated and specifically designed to provide the functionality of the component. The circuitry may be in the form of one or more integrated circuits, such as one or more application specific integrated circuits or one or more field-programmable gate arrays. By way of example, the VPP 106 may thus comprise circuitry which, when in use, will receive the rendered overlay from the overlay rendering unit and the image from an image processing unit, add the rendered overlay to the area of the image, and output the image with the rendered overlay.

In a software implementation, the circuitry may instead be in the form of a processor, such as a microprocessor, which in association with computer code instructions stored on a (non-transitory) computer-readable medium, such as a non-volatile memory, causes the camera 100 to carry out any method disclosed herein. Examples of non-volatile memory include read-only memory, flash memory, ferroelectric RAM, magnetic computer storage devices, optical discs, and the like. In a software case, the components 104, 106, 110, 112, 114 may thus each correspond to a portion of computer code instructions stored on the computer-readable medium, that, when executed by the processor, causes the camera 100 to carry out the functionality of the component.

It is to be understood that it is also possible to have a combination of a hardware and a software implementation, meaning that the functionality of some of the components 104, 106, 110, 112, 114 are implemented in hardware and others in software.

## Claims

1. A method of encoding images with an overlay, comprising
• an overlay rendering unit (110) performing the following steps:
∘ receiving (202) input regarding a graphical element to be added as overlay to an area of an image,
∘ receiving (204) input regarding a level of compression to be used when encoding the image,
∘ selecting (206) rendering settings based on the level of compression, wherein the rendering settings are selected to render the overlay utilizing less resources when the compression level is higher, than when the compression level is lower, and
∘ rendering (208) the overlay from the input regarding the graphical element using the rendering settings,
• a video post processing unit (106) performing the following steps:
∘ receiving the rendered overlay from the overlay rendering unit,
∘ receiving the image from an image processing unit,
∘ adding (210) the rendered overlay to the area of the image, and
o outputting the image with the rendered overlay
• an encoding unit performing the following steps
∘ receiving the image with the rendered overlay,
∘ receiving the input regarding the level of compression,
∘ encoding (212) the image with the rendered overlay using the level of compression, and
o outputting (214) the encoded image with the rendered overlay.

2. The method of claim 1, wherein the input regarding the level of compression is received from a rate controller (114).

3. The method of any of the preceding claims, wherein the level of compression is in the form of a quantization parameter, QP, value.

4. The method of any of the preceding claims, wherein the level of compression is a local level of compression to be used for the area of the image where the overlay is added.

5. The method of any of claims 1-3, wherein the level of compression is a global level of compression to be used for the image.

6. The method of any of the preceding claims, wherein the rendering settings comprise a level of detail in the overlay, wherein fewer details are included in the rendered overlay when the compression level is higher than when the compression level is lower.

7. The method of claim 6, wherein the rendering settings comprise a color format for rendering the overlay, and wherein a color format using fewer bits is selected when the compression level is higher than when the compression level is lower.

8. The method of claim 6, wherein the rendering settings comprise a spatial resolution of the overlay, wherein a lower spatial resolution is selected when the compression level is higher than when the compression level is lower.

9. The method of claim 8, wherein the rendering of the overlay includes retrieving, from a memory, one of a plurality of bitmap versions of the graphical element, wherein a bitmap version having at least one of a lower spatial resolution or a color format using fewer bits is selected when the compression level is higher than when the compression level is lower.

10. The method of claim 8, wherein the rendering settings comprise a tessellation level, wherein a lower tessellation level with fewer segments is selected when the compression level is higher than when the compression level is lower.

11. The method of claim 8, wherein fewer features of the graphical element are selected for inclusion in the rendering of the overlay when the compression level is higher than when the compression level is lower.

12. The method of claim 11, wherein text features of the graphical element having a size below a size threshold are excluded from the rendering of the overlay when the compression level is above a threshold, and included otherwise.

13. The method of any of the preceding claims, wherein the rendering settings comprise a state of an anti-aliasing filter, wherein the anti-aliasing filter is switched off when the compression level is above a threshold and switched on otherwise.

14. A monitoring camera (100) configured to encode images with an overlay, comprising
• an overlay rendering unit (110) configured to
∘ receive input (118) regarding a graphical element to be added as overlay to an area of an image (102),
∘ receive input regarding a level of compression to be used when encoding the image,
∘ select rendering settings based on the level of compression, wherein the rendering settings are selected to render the overlay utilizing less resources when the compression level is higher, than when the compression level is lower, and
∘ render the overlay from the input regarding the graphical element using the rendering settings,
• a video post processing unit (106) configured to
∘ receive the rendered overlay (108) from the overlay rendering unit,
∘ receive the image from an image processing unit (104),
∘ adding the rendered overlay to the area of the image, and
∘ output the image with the rendered overlay
• an encoding unit (112) configured to
∘ receive the image with the rendered overlay,
∘ receive the input regarding the level of compression,
∘ encode the image with the rendered overlay using the level of compression, and
∘ output the encoded image (113) with the rendered overlay

15. The monitoring camera of claim 14, further comprising a rate controller (114) configured to provide the level of compression to the overlay rendering unit and the encoding unit.
